# EUROPÄISCHE PATENTSCHRIFT

(11) **EP 1 082 258 B1**
(45) Veröffentlichungstag und Bekanntmachung des Hinweises auf die Patenterteilung: **04.09.2002**
(21) Anmeldenummer: 99938038.9
(22) Anmeldetag: 26.05.1999
(51) Int. Cl.: B65G 15/02, B65G 45/24

(54) **REINIGUNGSVORRICHTUNG FÜR EIN KURVENFÖRDERBAND**
CLEANING DEVICE FOR A CURVED CONVEYOR BELT
DISPOSITIF DE NETTOYAGE POUR BANDE TRANSPORTEUSE CURVILIGNE

(30) Priorität: 27.05.1998 DE 19823694
(43) Veröffentlichungstag der Anmeldung: 14.03.2001
(73) Patentinhaber: Wiessner GmbH, 95448 Bayreuth (DE)
(72) Erfinder: KILGERT, Franz, D-95447 Bayreuth (DE); FICHTEL, Jürgen, D-95488 Eckersdorf (DE); WIDMER, Hans, CH - 8753 MOLLIS (CH)
(74) Vertreter: Ruttensperger, Bernhard, Dipl.-Phys.
(86) Internationale Anmeldenummer: EP9903620
(87) Internationale Veröffentlichungsnummer: WO99061353

(56) Entgegenhaltungen:
- DE-A- 3 637 340
- GB-A- 2 174 350

## Beschreibung

Die Erfindung betrifft eine Vorrichtung zum Reinigen eines endlosen Förderbands, mit einer drehend angetriebenen, an das Förderband andrückbaren Reinigungswalze.

Aus der DE 36 37 340 ist eine gattungsgemäße Vorrichtung bekannt, die eine zylindrische Reinigungswalze zum Reinigen eines geradlinig geführten endlosen Förderbands aufweist. In zunehmendem Maße werden auch in der Bandhauptebene um eine Kurve geführte oder ringscheibenförmige Kurvenförderbänder verwendet, etwa als Verbindungsglied zwischen im Winkel zueinander verlaufenden geradlinigen Förderbändern. Insbesondere in der Lebensmittelindustrie sind auch solche Kurvenförderbänder regelmäßig gründlich zu reinigen.

Ziel der Erfindung ist es daher, eine Reinigungsvorrichtung anzugeben, welche zum gleichmäßigen Reinigen eines in seiner Hauptebene gekrümmt verlaufenden Förderbands geeignet ist.

Die Reinigungswalze der erfindungsgemäßen Reinigungsvorrichtung weist hierzu an ihrem der Kurveninnenseite des Förderbands benachbarten Ende einen kleineren Außendurchmesser auf als an ihrem der Kurvenaußenseite benachbarten Ende.

Hierdurch wird erreicht, daß die Relativgeschwindigkeit zwischen Walzenumfang und Förderband über die gesamte Bandbreite im wesentlichen konstant ist und hierdurch das Band gleichmäßig gereinigt wird.

Bevorzugt ist die Reinigungswalze konisch ausgebildet, wobei die örtlichen Radien der Reinigungswalze entlang deren Länge in den entsprechenden örtlichen Radien des Förderbandes über dessen Breite ein im wesentlichen konstantes Verhältnis zueinander aufweisen können.

Wenn die zu reinigende Oberfläche des Förderbands nicht flach eben ist, sondern in Bandlängsrichtung profiliert ist, etwa mit einer Längsrinne, kann die Umfangskontur der Reinigungswalze dem Profil der zu reinigenden Bandoberfläche komplementär angepaßt sein, wobei die dann profilierte Umfangskontur der Konusgrundform der Walze aufgelagert sein kann.

Bevorzugt sind eine Vielzahl von Sprühdüsen zum Besprühen der Reinigungswalze mit Reinigungsfluid auf einer Linie angeordnet, die zur Kurveninnenseite des Bandes hin im spitzen Winkel auf die Rotationsachse der Reinigungswalze zu läuft. Hierdurch läßt sich der Abstand zwischen der Reinigungswalze und den Sprühdüsen im wesentlichen konstant halten. Hierbei können die Düsen unmittelbar an einem gemeinsamen Versorgungsrohr befestigt sein.

Bevorzugt ist in Laufrichtung des Bandes hinter der Reinigungswalze an das Band eine Abstreifleiste für Reinigungsflüssigkeit quer zur Bandlaufrichtung anlegbar. Hierdurch wird gewährleistet, daß nach der Reinigungswalze an der Bandoberfläche noch anhaftende Restpartikel und Reinigungfluid abgestreift werden und in das darunter angeordnete Gehäuse zurückgeführt werden.

Bevorzugt ist auf der von der Reinigungswalze abgelegenen Seite des Förderbands in Laufrichtung des Bandes zur Reinigungswalze versetzt zumindest eine Niederhaltewalze vorgesehen, deren Rotationsachse - in Richtung orthogonal zur Bandhauptebene betrachtet - zur Kurvenkrümmung des Förderbands radial verläuft. Hierdurch wird das Band über die Gesamtbreite gleichmäßig auf die Reinigungswalze niedergedrückt.

Bevorzugt ist zum Reinigen der Gehäuseinnenseiten sowie der Einbauten eine am oberen Rand des Gehäuses umlaufende Ringleitung mit Sprühöffnungen angeordnet. Anhaftende Feststoffpartikel werden durch automatische Spülung entfernt, den Hygieneanforderungen somit Rechnung getragen.

Eine bevorzugte Ausführung der Erfindung wird nun anhand der beigefügten Figuren beschrieben. Es zeigen:
- Fig. 1: eine Querschnittsansicht durch eine erfindungsgemäße Reinigungsvorrichtung gemäß Linie I-I in Fig. 2; und
- Fig. 2: eine Draufsicht auf diese Vorrichtung gemäß Linie II-II in Fig. 1 in anderem Maßstab.

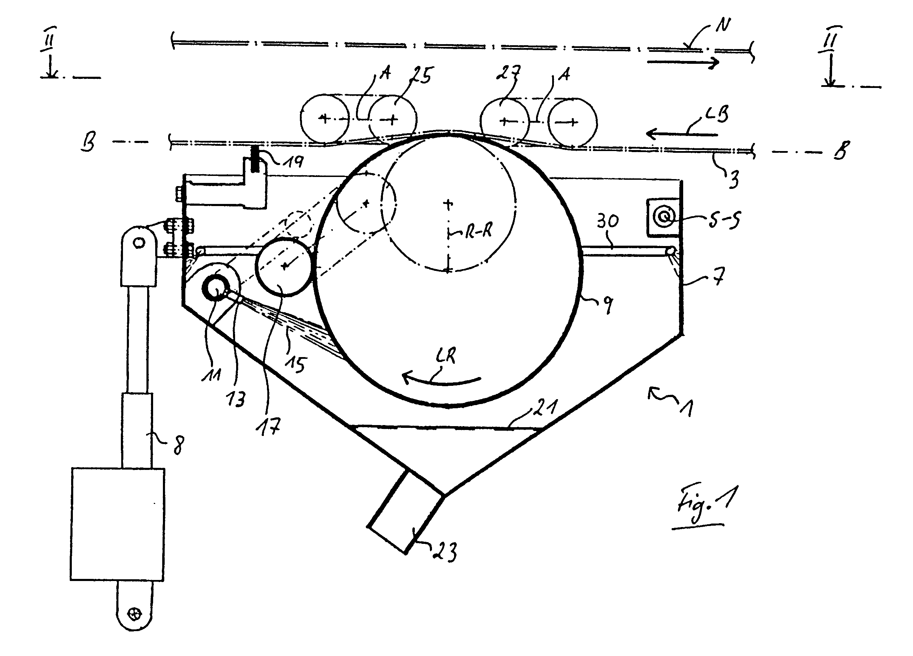

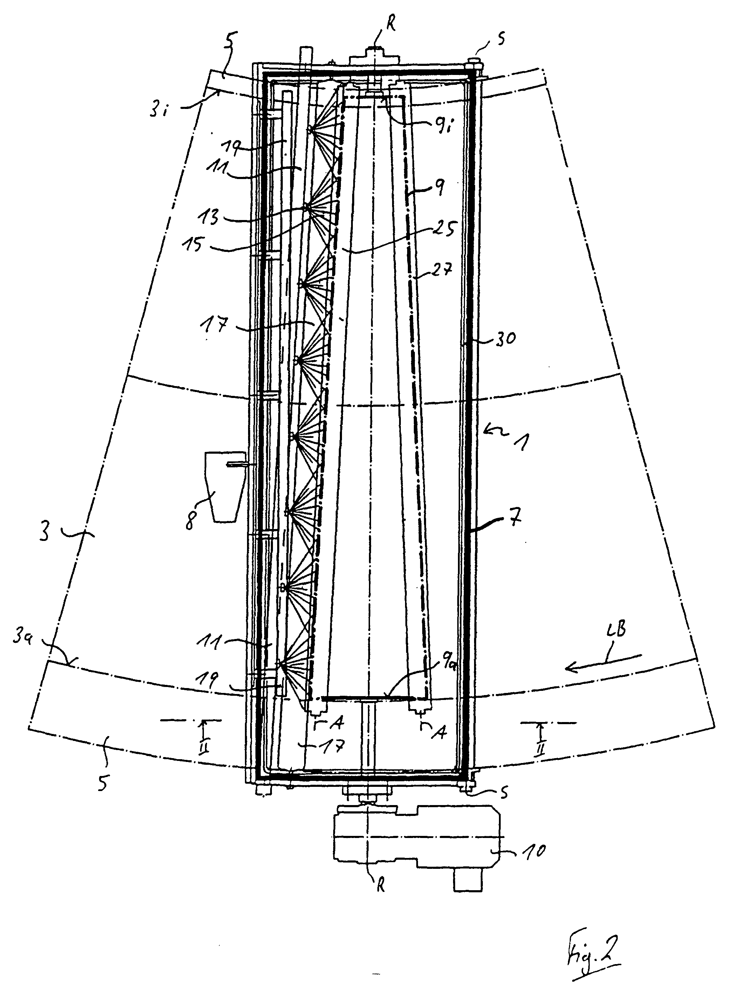

Gemäß Fig. 1 ist eine Reinigungsvorrichtung 1 unter einem endlosen Förderband angeordnet, um dessen unteren, in einer Bandlaufrichtung LB rücklaufenden Bandabschnitt 3 von unten her zu reinigen. Das hier insgesamt ringscheibenförmige Förderband läuft über der Reinigungsvorrichtung 1 in seiner Bandhauptebene B-B um gemäß Fig. 2 eine Kurve und hat somit einen kurveninneren Rand 3i und einen kurvenäußeren Rand 3a. Seitlich ist das Band 3 von einem Förderbandrahmen 5 begrenzt.

Ein nach oben offenes, nach unten trichterförmig zusammenlaufendes, langgestrecktes Gehäuse 7 der Reinigungsvorrichtung 1 erstreckt sich im wesentlichen radial zum Kurvenverlauf des Förderbands 3 und ist mittels eines Stellglieds 8 um eine entlang einem Längsrand des Gehäuses 7 verlaufende Achse S-S absenkbar.

In dem Gehäuse 7 ist eine mit Reinigungsflüssigkeit aufnehmendem - etwa mit filzartigem Material - beschichtete Reinigungswalze 9 herausnehmbar entlang ihrer Achse R-R drehbar gelagert und wird im Betrieb von einem Antrieb 10 entgegen der Laufrichtung LB des zu reinigenden unteren Bandabschnitts 3 in Richtung des Pfeils LR drehend angetrieben. Um eine gleichmäßige Relativgeschwindigkeit zwischen Förderband 3 und Reinigungswalze 9 über die gesamte Bandbreite zu erzielen, ist die Reinigungswalze 9 konisch ausgebildet, so daß ihr dem kurveninneren Rand 3i des Bandes näheres Ende 9i einen kleineren Außendurchmesser aufweist als ihr dem kurvenäußeren Rand 3a näheres Ende 9a.

In dem Gehäuse 7 ist eine Rohrleitung 11 (Düsenstock) für Reinigungsfluid, (hier ein wässrige Flüssigkeit) befestigt, die eine Vielzahl von hier flachstrahlenden Düsen 13 trägt, welche jeweils einen Reinigungsfluidstrahl 15 auf die Reinigungswalze 9 richten, derart, daß der Reinigungsfluidstrahl 15 im spitzen Winkel, entgegen der Laufrichtung LB der Reinigungswalze 9 auf den unter ihrer Achse R-R liegenden Teil der Reinigungswalze 9 auftrifft. Abgespülte Feststoffpartikel fallen somit unmittelbar nach unten in das trichterförmige Gehäuse 7 zu einem Auslaß 23. Der Abstand der Düsen 13 zur Umfangsfläche der Reinigungswalze 9 ist im wesentlichen konstant. Als Reinigungsfluid ist auch Gas oder Dampf verwendbar.

In Laufrichtung LB der Reinigungswalze 9 zwischen den Reinigungsfluidstrahlen 15 und dem Förderband 3 liegt an der Reinigungswalze 9 eine federnd gelagerte zylindrische Dichtwalze 17 an, welche überschüssiges Reinigungsfluid von der Reinigungswalze 9 abquetscht.

In dem Gehäuse 7 über der Rohrleitung 11 ist ferner eine Abstreifleiste 19 befestigt, die bei Betrieb in Laufrichtung LB des zu reinigenden unteren Bandabschnitts 3 hinter der Reinigungswalze 9 an dem Bandabschnitt 3 anliegt, um noch am Förderband 3 anhaftende Feststoffpartikel und Reinigungsfluid abzustreifen. Das von der Abstreifleiste 19 abtropfende Reinigungsfluid gelangt über das darunter angeordnete trichterförmige Gehäuse 7 in den Auslaß 23. Das Reinigungsfluid wird nach entsprechender Filterung und Aufbereitung der Waschvorrichtung wieder zugeführt oder wahlweise direkt entsorgt.

Auf der von der Reinigungswalze 9 abgewandten Seite des unteren Bandabschnitts 3 sind in Bandlaufrichtung LB vor und hinter der Andruckstelle der Reinigungswalze 9 jeweilige Andruckrollen 25, 27 am Rahmen 5 des Förderbands drehbar gelagert, welche das Band 3 gegen den Andruck der Reinigungswalze 9 abstützen. Die jeweiligen Achsen A-A der Andruckrollen 25, 27 verlaufen in Richtung der Kurveninnenseite 3i des Bandes zusammen.

Am oberen Rand des Gehäuses 7 ist innen umlaufend eine mit einer Vielzahl von Sprühöffnungen versehene Ringleitung 30 angeordnet, über die automatisch Reinigungsfluid versprüht wird. Hierdurch werden die Innenseiten des Gehäuses 7 sowie die Einbauten hygienisch sauber gehalten. Das versprühte Reinigungsfluid gelangt über den Auslaß 23 zu einer Filterung mit Aufbereitung oder wird wahlweise entsorgt.

## Patentansprüche

1. Vorrichtung zum Reinigen eines endlosen Förderbands (3), mit einer drehend angetriebenen, an das Förderband (3) andrückbaren Reinigungswalze (9),
**dadurch gekennzeichnet,**
**daß** die Reinigungswalze (9) zur Reinigung eines in seiner Hauptebene (B-B) gekrümmt verlaufenden Kurvenförderbands (3) an ihrem der Kurveninnenseite (3i) des Förderbands benachbarten Ende (9i) einen kleineren Außendurchmesser aufweist als an ihrem der Kurvenaußenseite (3a) benachbarten Ende (9a).

2. Vorrichtung nach Anspruch 1, **dadurch gekennzeichnet, daß** die Reinigungswalze (9) im wesentlichen konisch ist.

3. Vorrichtung nach Anspruch 1 oder 2, **dadurch gekennzeichnet, daß** die örtlichen Radien der Reinigungswalze (9) entlang deren Länge zu den entsprechenden örtlichen Radien des Förderbandes (3) über dessen Breite ein im wesentlichen konstantes Verhältnis zueinander aufweisen.

4. Vorrichtung nach einem der vorhergehenden Ansprüche, **dadurch gekennzeichnet, daß** die Rotationsachse (R-R) der Reinigungswalze (9) - in Richtung orthogonal zur Bandhauptebene (B-B) gesehen - zur Kurvenkrümmung des Förderbands radial verläuft.

5. Vorrichtung nach einem der vorhergehenden Ansprüche, **dadurch gekennzeichnet, daß** die Umfangskontur der Reinigungswalze einen Querschnittsprofil der zu reinigenden Bandoberfläche komplementär angepaßt ist.

6. Vorrichtung nach einem der vorhergehenden Ansprüche, **dadurch gekennzeichnet, daß** eine Vielzahl von Sprühdüsen (13) zum Besprühen der Reinigungswalze (9) mit Reinigungsfluid auf einer Linie liegen, die zur Kurveninnenseite (3i) des Bandes (3i) im spitzen Winkel auf die Rotationsachse (R-R) der Reinigungswalze zu läuft.

7. Vorrichtung nach Anspruch 6, **dadurch gekennzeichnet, daß** in Laufrichtung (LB) des Bandes (3) hinter der Reinigungswalze (9) an das Band eine Abstreifleiste (19) für Reinigungsflüssigkeit quer zur Laufrichtung (LB) des Bandes (3) anlegbar ist.

8. Vorrichtung nach einem der vorhergehenden Ansprüche, **dadurch gekennzeichnet, daß** zum Stützen des Bandes (3) gegen die Andrückkraft der Reinigungswalze (9) auf der von der Reinigungswalze (9) abgelegenen Seite des Bandes (3) in Laufrichtung (LB) des Bands (3) zur Reinigungswalze (9) versetzt zumindest eine Niederhaltewalze (25, 27) drehbar gelagert ist, deren Rotationsachse (A-A) - in Richtung orthogonal zur Bandhauptebene (B-B) gesehen - zur Kurvenkrümmung des Förderbands (3) radial verläuft.

9. Vorrichtung nach einem der vorhergehenden Ansprüche, **dadurch gekennzeichnet, daß** die Reinigungswalze (9) in einem Gehäuse (7) aufgenommen ist, entlang dessen Seitenwänden eine Leitung (30) verläuft, um die Gehäuseinnenseiten mit Reinigungsfluid zu besprühen.

## Claims

1. Apparatus for cleaning an endless conveyor belt (3) comprising a cleaning drum (9) which is driven in rotation and may be pressed against the conveyor belt (3), **characterised in that**, for cleaning a curved conveyor belt (3) curving in its main plane (B-B), the cleaning drum (9) has a smaller external diameter at its end (9i) adjacent to the curved inner side (3i) of the conveyor belt than at its end (9a) adjacent to the curved outer side (3a).

2. Apparatus according to claim 1, **characterised in that** the cleaning drum (9) is substantially conical.

3. Apparatus according to claim 1 or 2, **characterised in that**, along the length of the cleaning drum (9), the local radii of the cleaning drum (9) are in a substantially constant ratio to the corresponding local radii of the conveyor belt (3) across its width.

4. Apparatus according to any one of the preceding claims, **characterised in that**, viewed in the direction orthogonal to the main belt plane (B-B), the axis of rotation (R-R) of the cleaning drum (9) extends radially to the curvature of the conveyor belt.

5. Apparatus according to any one of the preceding claims, **characterised in that** the circumferential contour of the cleaning drum complementarily matches a cross-sectional profile of the belt surface to be cleaned.

6. Apparatus according to any one of the preceding claims, **characterised in that** a plurality of spray nozzles (13) to spray cleaning fluid on the cleaning drum (9) are situated in a row extending at an acute angle to the axis of rotation (R-R) of the cleaning drum and pointing toward the curved inner side (3i) of the belt (3i).

7. Apparatus according to claim 6, **characterised in that**, downstream of the cleaning drum (9) in the direction of travel (LB) of the belt (3), a stripping bar (19) to strip off cleaning fluid may be applied to the belt transversely to the direction of travel (LB) of the belt (3).

8. Apparatus according to any one of the preceding claims, **characterised in that** at least one depressing roller (25, 27) is rotatably mounted on the side of the belt (3) remote from the cleaning drum (9) and offset from the cleaning drum (9) in the direction of travel (LB) of the belt (3) to support the belt (3) against the compression applied by the cleaning drum (9), the axis of rotation (A-A) of said at least one depressing roller (25, 27) extending radially to the curvature of the conveyor belt (3) viewed in the direction orthogonal to the main belt plane (B-B).

9. Apparatus according to any one of the preceding claims, **characterised in that** the cleaning drum (9) is received in a housing (7) having a pipe (30) extending along its side walls to spray cleaning fluid on inside surfaces of said housing.

## Revendications

1. Dispositif pour nettoyer une bande transporteuse sans fin (3), comprenant un rouleau de nettoyage (9) entraîné en rotation, susceptible d'être appuyé sur la bande transporteuse (3),
**caractérisé en ce que**
le rouleau de nettoyage (9), pour nettoyer une bande transporteuse curviligne (3) s'étendant de manière courbe dans son plan principal (B-B), présente un diamètre extérieur qui est plus petit, à son extrémité (9i) adjacente au côté intérieur (3i) de la courbe formée par la bande transporteuse, qu'à son extrémité (9a) adjacente au côté extérieur (3a) de la courbe.

2. Dispositif selon la revendication 1, **caractérisé en ce que** le rouleau de nettoyage (9) est sensiblement conique.

3. Dispositif selon la revendication 1 ou 2, **caractérisé en ce que** les rayons du rouleau de nettoyage (9), en chaque point sur la longueur de ce rouleau, ont, avec les rayons correspondants de la bande transporteuse (3), sur sa largeur, un rapport sensiblement constant, les uns par rapport aux autres.

4. Dispositif selon l'une des revendications précédentes, **caractérisé en ce que** l'axe de rotation (R-R) du rouleau de nettoyage (9) - vu dans une direction perpendiculaire au plan principal (B-B) de la bande-s'étend radialement par rapport à la courbure de la courbe de la bande transporteuse.

5. Dispositif selon l'une des revendications précédentes, **caractérisé en ce que** le contour périphérique du rouleau de nettoyage présente un profil de section qui est complémentaire de celui de la surface de la bande à nettoyer.

6. Dispositif selon l'une des revendications précédentes, **caractérisé en ce qu'**une pluralité de buses de vaporisation (13), destinées à asperger le rouleau de nettoyage (9) avec du liquide de nettoyage, sont situées sur une ligne qui, du côté intérieur de la courbe (3i) de la bande (3), converge selon un angle aigu avec l'axe de rotation (R-R) du rouleau de nettoyage.

7. Dispositif selon la revendication 6, **caractérisé en ce que**, derrière le rouleau de nettoyage (9), vu dans le sens de circulation (LB) de la bande (3), il est possible de monter sur la bande, perpendiculairement au sens de circulation (LB) de la bande (3), une raclette (19) destinée au liquide de nettoyage.

8. Dispositif selon l'une des revendications précédentes, **caractérisé en ce que**, afin de soutenir la bande (3) vis-à-vis de la force d'appui du rouleau de nettoyage (9), au moins un rouleau presseur (25, 27) est monté tournant sur la face de la bande (3) qui est opposée au rouleau de nettoyage (9), décalé par rapport au rouleau de nettoyage (9) dans le sens de circulation (LB) de la bande (3), rouleau presseur dont l'axe de rotation (A-A) - vu perpendiculairement au plan principal de la bande (B-B) - s'étend radialement par rapport à la courbure de la bande transporteuse (3).

9. Dispositif selon l'une des revendications précédentes, **caractérisé en ce que** le rouleau de nettoyage (9) est logé dans un boîtier (7) le long des parois latérales duquel s'étend une conduite (30) qui sert à asperger, avec du liquide de nettoyage, les faces intérieures du boîtier.
